(19) Europäisches Patentamt
European Patent Office
Office européen des brevets

(11) **EP 3 693 640 A1**

(12) **EUROPEAN PATENT APPLICATION**
published in accordance with Art. 153(4) EPC

(43) Date of publication:
**12.08.2020 Bulletin 2020/33**

(51) Int Cl.:
*F16K 17/10* (2006.01)

(21) Application number: **19767782.6**

(22) Date of filing: **15.03.2019**

(86) International application number:
**PCT/JP2019/010884**

(87) International publication number:
**WO 2019/177154 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2018 JP 2018049249**

(71) Applicant: **KYB Corporation**
**Tokyo 105-6111 (JP)**

(72) Inventor: **EGAWA, Masahiro**
**Tokyo 105-6111 (JP)**

(74) Representative: **Grünecker Patent- und**
**Rechtsanwälte**
**PartG mbB**
**Leopoldstraße 4**
**80802 München (DE)**

(54) **RELIEF VALVE**

(57)     A relief valve (100) comprises a suction poppet (3) being configured to allow flow of working fluid from the low-pressure passage (4L) to the high-pressure passage (4H) in a valve-opened state, a pilot passage (60) being configured such that the high-pressure passage (4H) and the back-pressure chamber (8) in the suction poppet (3) are communicated through the pilot passage (60), and a pilot poppet (9) configured to open/close a passage (21) through which the back-pressure chamber (8) and a drain chamber (12) provided in the guide plug (7) are communicated. The suction poppet (3) has a first seating portion (1a) being configured to be seated onto the first seat portion (1a) of a main body (1). The main poppet (5) has a projecting portion (53a) projecting towards the high-pressure passage (4H). A length (L) from the first seating portion (3a) to the tip-end-side opening portion (61a) is set so as to be equal to or longer than an outer diameter $D_0$ of the projecting portion (53a).

FIG.1

EP 3 693 640 A1

**Description**

TECHNICAL FIELD

The present invention relates to a relief valve.

BACKGROUND ART

JP2001-343082A discloses a relief valve in which a poppet 10 is opened as a check valve cv is opened to allow working fluid to flow from a high-pressure passage 3 to a low-pressure passage 4, and thereby, a pressure on the high-pressure passage 3 side is maintained at a predetermined pressure.

In a relief valve described in JP2001-343082A, in a case in which negative pressure is generated on the high-pressure passage 3 side, in other words, in a case in which the pressure on the high-pressure passage 3 side has become lower than a pressure on the low-pressure passage 4 side, a seat portion 12 is opened as a poppet 7 is moved against a spring S1. With such a configuration, the working fluid on the low-pressure passage 4 side is supplied to the high-pressure passage 3 side, and therefore, occurrence of a cavitation is prevented.

With the relief valve described in JP2001-343082A, the larger the pressure difference between the pressure acting on the outer side of the poppet 7 and the pressure acting on the inner side of the poppet 7 is, the larger the opening degree of the poppet 7 becomes, and thereby, the suction capacity is improved. A pilot chamber 11 inside the poppet 7 is communicated with the high-pressure passage 3 through a communication hole 14 of a control piston P.

SUMMARY OF INVENTION

However, when the poppet 7 is opened and the working fluid starts to flow from the low-pressure passage 4 to the high-pressure passage 3, in a region close to the low-pressure passage 4 in the high-pressure passage 3, the pressure is increased relative to a region distant from the low-pressure passage 4. Therefore, if an opening portion of the communication hole 14 is located in the region close to the low-pressure passage 4 in the high-pressure passage 3, the pressure difference between the pressure acting on the outer side of the poppet 7 and the pressure acting on the inner side of the poppet 7 is decreased, and the opening degree of the poppet 7 is not increased sufficiently. Thus, there is a risk in that it may become impossible to ensure a sufficient suction capacity.

An object of the present invention is to improve a suction capacity of a relief valve.

According to one aspect of the present invention, a relief valve includes a valve case attached to an apparatus main body, the apparatus main body being provided with a high-pressure passage and a low-pressure passage; a suction poppet provided in the valve case, the suction poppet being configured to allow flow of working fluid from the low-pressure passage to the high-pressure passage in a valve-opened state in which the suction poppet is separated from a first seat portion provided in the apparatus main body, and the suction poppet being configured to shut off communication between the high-pressure passage and the low-pressure passage in a valve-closed state in which suction poppet is seated onto the first seat portion; a main poppet provided in the suction poppet, the main poppet being configured to allow flow of the working fluid from the high-pressure passage to the low-pressure passage in a valve-opened state in which the main poppet is separated from a second seat portion provided in the suction poppet, and the main poppet being configured to shut off communication between the high-pressure passage and the low-pressure passage in a valve-closed state in which the main poppet is seated onto the second seat portion; a guide plug configured to define a back-pressure chamber in the suction poppet between the guide plug and the main poppet; a pilot passage provided in the main poppet, the pilot passage being configured such that the high-pressure passage and the back-pressure chamber are communicated through the pilot passage; and a pilot poppet configured to open/close a passage through which the back-pressure chamber and a drain chamber provided in the guide plug are communicated, wherein when a pressure in the high-pressure passage reaches a set pressure, the main poppet is opened as the pilot poppet is opened, and thereby, the working fluid is guided from the high-pressure passage to the low-pressure passage; when the pressure in the high-pressure passage becomes lower than a pressure in the low-pressure passage, the suction poppet is opened and the working fluid is guided from the low-pressure passage to the high-pressure passage; the suction poppet has a first seating portion configured to be seated onto the first seat portion; the main poppet has a second seating portion and a projecting portion, the second seating portion being seated onto the second seat portion, and the projecting portion projecting out from the second seating portion towards the high-pressure passage; the projecting portion is provided with a tip-end-side opening portion of the pilot passage, the tip-end-side opening portion facing the high-pressure passage; and a length from the first seating portion to the tip-end-side opening portion is set so as to be equal to or longer than an outer diameter of the projecting portion.

## BRIEF DESCRIPTION OF DRAWINGS

FIG. 1 is a sectional view of a relief valve.
FIG. 2A is a front view of a pilot piston viewed from the IIa direction in FIG. 3A.
FIG. 2B is a sectional view taken along a line IIb-IIb in FIG. 2A.
FIG. 3A is a plan view of the pilot piston viewed from the IIIa direction in FIG. 2A.
FIG. 3B is a sectional view of a main poppet and shows a cross-section of the pilot piston taken along a line IIIb-IIIb in FIG. 3A.

## DESCRIPTION OF EMBODIMENTS

A relief valve 100 according to an embodiment of the present invention will be described with reference to the drawings.

When a pressure of working oil in a high-pressure passage 4H reaches a set pressure, the relief valve 100 is opened to allow the working oil to escape from the high-pressure passage 4H to a low-pressure passage 4L, and thereby, the pressure of the working oil in the high-pressure passage 4H is prevented from becoming abnormally high. In addition, the relief valve 100 has an antivoid function and prevents occurrence of a cavitation by being opened when a negative pressure is generated in the high-pressure passage 4H to supply the working oil from the low-pressure passage 4L to the high-pressure passage 4H. In the present embodiment, although the working oil is used as the working fluid, other fluid such as working water, compressed air, or the like may also be used as the working fluid.

The relief valve 100 is attached to an apparatus main body 1 by being screw-fastened. The apparatus main body 1 is a main body of a hydraulic apparatus such as a hydraulic cylinder, a hydraulic pump, a hydraulic motor, a valve block having a plurality of valves, and so forth. The apparatus main body 1 is provided with the high-pressure passage 4H and the low-pressure passage 4L with the relief valve 100 provided therebetween as a boundary. In the apparatus main body 1, a first seat portion 1a is provided between the high-pressure passage 4H and the low-pressure passage 4L such that a suction poppet 3 of the relief valve 100, which will be described later, seats thereon. In the above, the apparatus main body 1 is not limited to the main body of the hydraulic apparatus, and the apparatus main body 1 also includes a block body provided between the respective hydraulic apparatus.

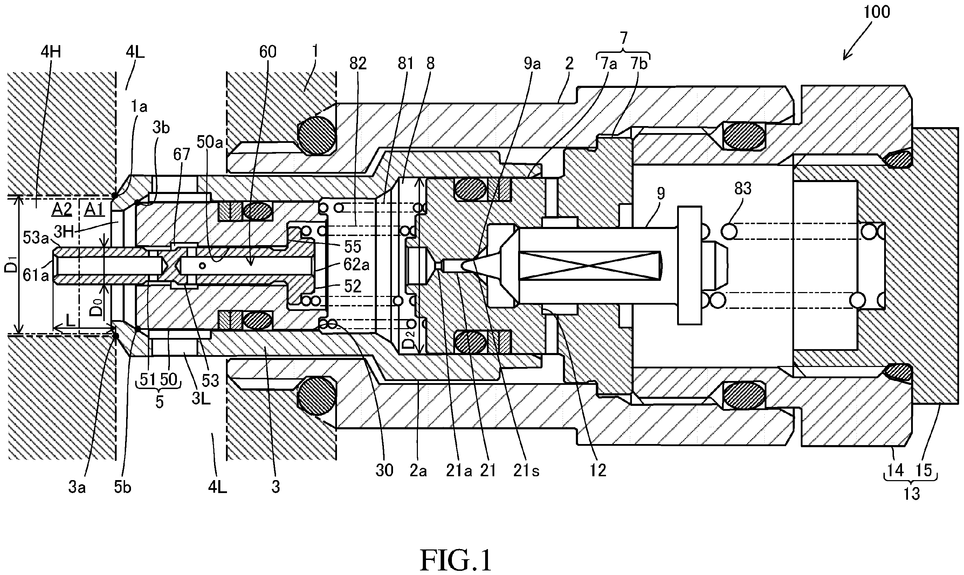

As shown in FIG. 1, the relief valve 100 has a cylindrical valve case 2, a cylindrical suction poppet 3, a main poppet 5, a guide plug 7, a pilot poppet 9, and a case plug 13. The left end side in the figure of the cylindrical valve case 2 is attached to the apparatus main body 1. The cylindrical suction poppet 3 is provided in the valve case 2. The main poppet 5 is provided in the suction poppet 3. The guide plug 7 forms, together with the main poppet 5, a back-pressure chamber 8 in the suction poppet 3. The pilot poppet 9 opens/closes a passage 21 through which the back-pressure chamber 8 and a drain chamber 12 provided in the guide plug 7 are communicated with each other. The case plug 13 closes an opening of the valve case 2 on the right end side in the figure. The case plug 13 has a base portion 14 that is screw-fastened to the valve case 2 and a spring bearing portion 15 that is screw-fastened to the base portion 14.

The suction poppet 3 is provided so as to be movable in the valve case 2 in the axial direction, and a part thereof is projected out from an opening of the valve case 2 on the left end side in the figure. In this description, when simply referred to as "the axial direction", it means the center axial direction of the relief valve 100, in other words, the operating directions of the respective components of the relief valve 100.

The suction poppet 3 is a bottomed cylindrical member having a cylindrical portion and a bottom portion. The suction poppet 3 has an accommodating hole 30 that accommodates the main poppet 5. In the suction poppet 3, the bottom portion is provided with a high-pressure port 3H that communicates with the high-pressure passage 4H, and the cylindrical portion is provided with a low-pressure port 3L that communicates with the low-pressure passage 4L.

A tip end portion of the suction poppet 3 is formed to have a gradually narrowing tapered shape the outer diameter and the inner diameter of which are reduced towards the end in the axial direction. The tapered shaped tip end portion of the suction poppet 3 is configured such that an outer circumferential side thereof is formed as a first seating portion 3a that is seated onto the first seat portion 1a of the apparatus main body 1 and such that an inner circumferential side thereof is formed as a second seat portion 3b onto which the main poppet 5, which will be described later, is seated.

As described later, the suction poppet 3 is a valve body that operates in the opening direction when the negative pressure is generated in the high-pressure passage 4H. In a valve-opened state in which the first seating portion 3a is separated from the first seat portion 1a provided on the apparatus main body 1, the suction poppet 3 allows the flow of the working oil from the low-pressure passage 4L to the high-pressure passage 4H. In a valve-closed state in which the first seating portion 3a is seated onto the first seat portion 1a of the apparatus main body 1, the suction poppet 3 shuts off the communication between the high-pressure passage 4H and the low-pressure passage 4L.

An opening of the accommodating hole 30 of the suction poppet 3 on the right end side in the figure is closed by the guide plug 7. The guide plug 7 has a tip end portion 7a that is accommodated in the accommodating hole 30 of the suction poppet 3 and a base end portion 7b that is held by being sandwiched between a tip end portion of the base portion 14 and a step portion formed in the valve case 2. As the base end portion 7b is held by being sandwiched between the base portion 14 and the valve case 2, the guide plug 7 is fixed in the valve case 2.

The suction poppet 3 slides along an outer circumferential surface of the tip end portion 7a of the guide plug 7. A seal member that seals a gap between the guide plug 7 and the suction poppet 3 is provided between the outer circumferential surface of the tip end portion 7a of the guide plug 7 and an inner circumferential surface of the suction poppet 3.

In the accommodating hole 30 of the suction poppet 3, the main poppet 5 is provided so as to be slidable in the axial direction. The main poppet 5 has a main body portion 50 that is provided with a sliding hole 50a penetrating through the main body portion 50 in the axial direction and a pilot piston 51 that is provided in the sliding hole 50a so as to be slidable. The main poppet 5 is provided with a pilot passage 60 through which the high-pressure passage 4H and the back-pressure chamber 8 are communicated. A detail configuration of the pilot passage 60 will be described later.

The main poppet 5 slides along the inner circumferential surface of the accommodating hole 30 of the suction poppet 3. A seal member that seals a gap between the main body portion 50 and the suction poppet 3 is provided between an outer circumferential surface of the main body portion 50 and the inner circumferential surface of the suction poppet 3. An outer circumference edge of the main body portion 50 on the tip end side is formed as a second seating portion 5b that is seated onto the second seat portion 3b of the suction poppet 3.

The back-pressure chamber 8 is a space that is defined by the inner circumferential surface of the suction poppet 3, a back surface of the main poppet 5, and a tip end surface of the guide plug 7. The back-pressure chamber 8 is communicated with the high-pressure passage 4H via the pilot passage 60.

The pilot piston 51 has a flange portion 52 that is arranged in a recessed portion 55 formed in a surface of the main body portion 50 facing the back-pressure chamber 8 and a columnar shaft portion 53 that extends from the flange portion 52 in the axial direction. A tip end portion of the pilot piston 51, in other words, a tip end portion of the shaft portion 53 is formed as a projecting portion 53a that projects out from a tip end surface of the main body portion 50 facing the high-pressure passage 4H. In other words, the main poppet 5 has the projecting portion 53a that projects out from the second seating portion 5b into the high-pressure passage 4H.

A spring 81 is provided between the main body portion 50 of the main poppet 5 and the guide plug 7, and a spring 82 is provided between the flange portion 52 of the pilot piston 51 and the guide plug 7. The spring 81 is a biasing member that pushes the main body portion 50 so as to bias the second seating portion 5b of the main poppet 5 in the direction in which the second seating portion 5b is seated onto the second seat portion 3b. The spring 82 is a biasing member that pushes the flange portion 52 so as to bias the flange portion 52 in the direction in which the flange portion 52 is brought into contact with a bottom surface of the recessed portion 55 of the main body portion 50.

The main poppet 5 is a valve body that is operated in the opening direction when the pressure in the high-pressure passage 4H reached the set pressure. In a valve-opened state in which the second seating portion 5b is separated from the second seat portion 3b provided on the suction poppet 3, the main poppet 5 allows the flow of the working oil from the high-pressure passage 4H to the low-pressure passage 4L. In the valve-closed state in which the second seating portion 5b is seated onto the second seat portion 3b of the suction poppet 3, the main poppet 5 shuts off the communication between the high-pressure passage 4H and the low-pressure passage 4L.

The pilot poppet 9 is assembled into the guide plug 7. The guide plug 7 is formed with the drain chamber 12 that communicates with the low-pressure passage 4L through a gap 2a between an outer circumferential surface of the suction poppet 3 and an inner circumferential surface of the valve case 2. The drain chamber 12 communicates with the back-pressure chamber 8 through the passage 21 provided in the guide plug 7. The passage 21 is provided with a seat portion 21s onto which a seating portion 9a of the pilot poppet 9 is seated. A restrictor 21a that imparts resistance to the flow of the working oil passing therethrough is provided between the seat portion 21s and an opening surface facing the back-pressure chamber 8 in the passage 21.

A spring 83 is provided between the pilot poppet 9 and the spring bearing portion 15. The spring 83 is a biasing member that biases the pilot poppet 9 in the direction in which the seating portion 9a is seated onto the seat portion 21s.

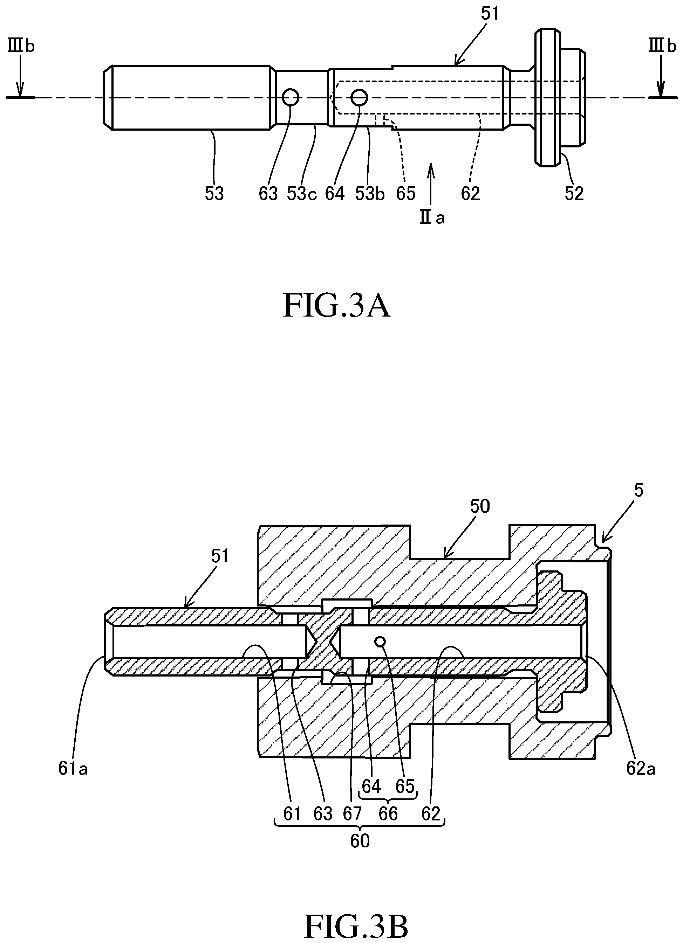

The pilot passage 60 that guides the working oil in the high-pressure passage 4H to the back-pressure chamber 8 will be described. As shown in FIGs. 1, 2A, 2B, 3A, and 3B, the pilot passage 60 has a tip-end-side passage 61, a base-end-side passage 62, a communicating passage 67, through holes 63, and a variable restrictor 66. The tip-end-side passage 61 is provided in the pilot piston 51 and has a tip-end-side opening portion 61a facing the high-pressure passage 4H. The base-end-side passage 62 is provided in the pilot piston 51 and has a base-end-side opening portion 62a facing the back-pressure chamber 8. The communicating passage 67 is provided between an outer circumferential surface of the pilot piston 51 and an inner circumferential surface of the sliding hole 50a of the main body portion 50 and through which the tip-end-side passage 61 and the base-end-side passage 62 are communicated. The through holes 63 through which the tip-end-side passage 61 and the communicating passage 67 are communicated. The variable restrictor 66 an opening area of which is changed as the pilot piston 51 slides with respect to the main body portion 50.

In this embodiment, because the pilot passage 60 is provided with the variable restrictor 66 the opening area of which is changed as the pilot piston 51 slides with respect to the main body portion 50, it is possible to adjust a valve-opening property of the relief valve 100.

The variable restrictor 66 has first restricting holes 64 and a second restricting hole 65 provided in the pilot piston 51. The first restricting holes 64 and the second restricting hole 65 are formed between the base-end-side passage 62 and the communicating passage 67 and impart resistance to the flow of the working oil passing therethrough. The second restricting hole 65 has a smaller opening area than the first restricting hole 64. The second restricting hole 65 is provided at a position closer to the base-end-side opening portion 62a than the first restricting hole 64.

As the pressure in the high-pressure passage 4H is increased, the pilot piston 51 is moved in the axial direction against the biasing force exerted by the spring 82. When the pressure in the high-pressure passage 4H is lower than a predetermined pressure PI, the pilot piston 51 is in a state in which the flange portion 52 is pushed against the recessed portion 55 of the main body portion 50 by the biasing force exerted by the spring 82. At this time, a projecting amount of the projecting portion 53a of the pilot piston 51 is maximized, and so, this state is also referred to as a maximum-projected state. When the pressure in the high-pressure passage 4H becomes equal to or higher than the predetermined pressure PI, the pilot piston 51 slides inside the sliding hole 50a so as to approach the guide plug 7.

The first restricting holes 64 communicate with the communicating passage 67 when the pressure in the high-pressure passage 4H is lower than the predetermined pressure PI, and when the pressure in the high-pressure passage 4H becomes equal to or higher than the predetermined pressure PI, the openings of the first restricting holes 64 are closed by the inner circumferential surface of the sliding hole 50a, and its communication with the communicating passage 67 is shut off.

An annular groove 53c is formed on an outer circumferential surface of the shaft portion 53 of the pilot piston 51, and the above-mentioned through holes 63 are formed in the groove 53c. In this embodiment, the number of the through holes 63 is the same as the number of the first restricting holes 64, and the inner diameter of each through hole 63 is set so as to have a dimension that is equal to or larger than that of the inner diameter of the first restricting holes 64. In other words, the total opening area of the through holes 63 is set so as to be equal to or larger than the total opening area of the first restricting holes 64.

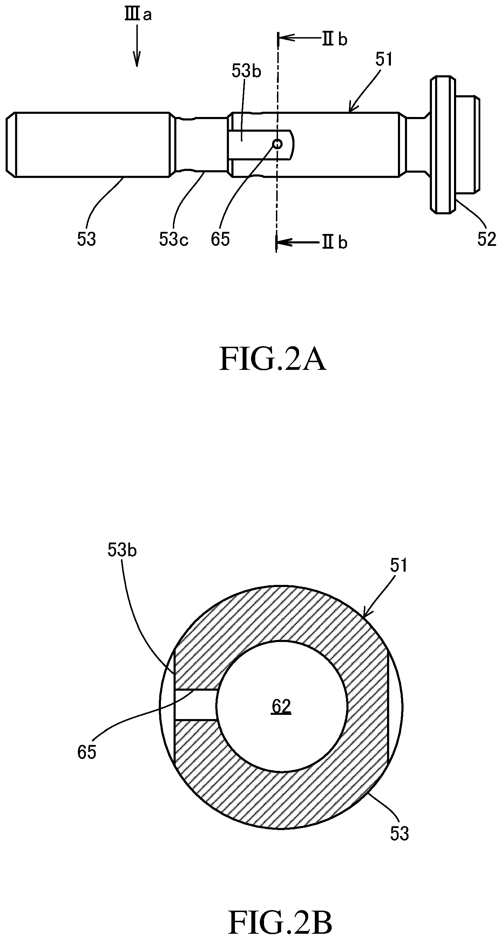

As shown in FIGs. 2A and 2B, the outer circumferential surface of the shaft portion 53 of the pilot piston 51 is formed with a flat surface portion 53b that defines a space with the inner circumferential surface of the sliding hole 50a, and the above-mentioned second restricting hole 65 is formed in the flat surface portion 53b. As shown in FIGs. 1 to 3B, the second restricting hole 65 is communicated with the communicating passage 67 when the pressure in the high-pressure passage 4H is lower than the predetermined pressure P1. Furthermore, when the pressure in the high-pressure passage 4H is equal to or higher than the predetermined pressure PI, in other words, even in a state in which the communication between the first restricting holes 64 and the communicating passage 67 is shut off, the second restricting hole 65 is communicated with the communicating passage 67.

The tip-end-side opening portion 61a of the pilot passage 60 facing the high-pressure passage 4H is provided on a tip end surface of the projecting portion 53a. As shown in FIG. 1, when the suction poppet 3 is in the valve-closed state and the projecting portion 53a is in the maximum-projected state, the tip-end-side opening portion 61a is positioned at the outer side of the suction poppet 3 in the axial direction. As described later, as the pilot poppet 9 is opened, the working oil in the high-pressure passage 4H is introduced into the pilot passage 60 from the tip-end-side opening portion 61a and is guided to the back-pressure chamber 8 through the variable restrictor 66. The working oil that has guided to the back-pressure chamber 8 is then guided to the drain chamber 12 by passing through the restrictor 21a and guided to the low-pressure passage 4L through the gap 2a. The low-pressure passage 4L is connected to a tank (not shown) that stores the working oil.

An main operation of the relief valve 100 according to this embodiment will be described.

<Relief Operation>

The pilot poppet 9 is opened when the pressure in the high-pressure passage 4H reaches the set pressure of the pilot poppet 9 (a cracking pressure of the pilot poppet 9) that is set by the spring 83. As the pilot poppet 9 is opened, the working oil in the back-pressure chamber 8 flows into the drain chamber 12 through the passage 21 and is discharged to the low-pressure passage 4L. In the above, the restrictor 21a formed in the passage 21 imparts resistance to the working oil flowing from the back-pressure chamber 8 to the drain chamber 12. Therefore, the pressure in the back-pressure chamber 8 is maintained so as to fall within a predetermined pressure range that is higher than the pressure in the low-pressure passage 4L.

The working oil in the high-pressure passage 4H is guided to the back-pressure chamber 8 through the variable restrictor 66 of the pilot passage 60. In other words, the pressure in the back-pressure chamber 8 is determined in accordance with a balance between the opening area of the variable restrictor 66 that is an upstream-side restrictor and an opening area of the restrictor 21a on the downstream side.

In a state in which before the pressure in the high-pressure passage 4H reaches the cracking pressure of the main poppet 5, the working oil in the high-pressure passage 4H flows into the back-pressure chamber 8 through the first restricting holes 64 of the pilot passage 60, and a differential pressure is caused between the back-pressure chamber 8 and the high-pressure passage 4H in accordance with the first restricting holes 64. When the pressure difference between the high-pressure passage 4H and the back-pressure chamber 8 is increased, the pilot piston 51 is moved against the biasing force exerted by the spring 82. As the pressure in the high-pressure passage 4H is increased and the communication between the first restricting holes 64 and the communicating passage 67 is shut off due to the movement of the pilot piston 51, the working oil in the tip-end-side passage 61 flows into the base-end-side passage 62 through a space between the flat surface portion 53b and the inner circumferential surface of the sliding hole 50a and the second restricting hole 65, and the working oil is guided to the back-pressure chamber 8.

Because the opening area of the second restricting hole 65 is smaller than those of the first restricting holes 64, the pressure difference between the high-pressure passage 4H and the back-pressure chamber 8 is increased. Thus, the second seating portion 5b of the main body portion 50 is separated from the second seat portion 3b of the suction poppet 3, and the main poppet 5 is shifted to the valve-opened state. As the main poppet 5 is opened, the working oil is guided from the high-pressure passage 4H to the low-pressure passage 4L, and thereby, it is possible to prevent the pressure in the high-pressure passage 4H from becoming abnormally high.

As described above, soon after the pilot poppet 9 is opened, in other words, in a state in which the pressure in the high-pressure passage 4H is equal to or higher than the cracking pressure of the pilot poppet 9 but lower than the cracking pressure of the main poppet 5, the working oil flows from the high-pressure passage 4H to the back-pressure chamber 8 through the first restricting holes 64 having larger opening area than the second restricting hole 65. Therefore, it is possible to suppress occurrence of a phenomenon of start-to-leak in which the working oil flows from the high-pressure passage 4H to the low-pressure passage 4L as the main poppet 5 is opened slightly before the pressure reaches the cracking pressure of the main poppet 5.

Furthermore, as the first restricting holes 64 are closed along with the increase in the pressure in the high-pressure passage 4H and the working oil flows form the high-pressure passage 4H to the back-pressure chamber 8 through the second restricting hole 65, the pressure in the back-pressure chamber 8 is reduced greatly, and the main poppet 5 is opened responsively in response to the increase in the pressure in the high-pressure passage 4H. In other words, in a state in which the pressure in the high-pressure passage 4H is equal to or higher than the cracking pressure of the main poppet 5, the working oil is guided to the back-pressure chamber 8 through the second restricting hole 65 having smaller opening area than the first restricting holes 64, and thereby, it is possible to improve an override property of the relief valve 100.

<Suction Operation>

On the other hand, when the negative pressure is generated in the high-pressure passage 4H, in other words, the pressure in the high-pressure passage 4H becomes lower than the pressure in the low-pressure passage 4L, the suction poppet 3 is opened to guide the working oil from the low-pressure passage 4L to the high-pressure passage 4H. During a suction operation, a force Fs acting on the suction poppet 3 is expressed as Equation (1) below.

(Eq. 1)

$$Fs = (P_L - P_H) \times (D_2{}^2 - D_1{}^2) \times \pi/4 \qquad (1)$$

Wherein, $P_L$ is the pressure in the low-pressure passage 4L, $P_H$ is the pressure in the high-pressure passage 4H, $D_2$ is the inner diameter of the inner circumferential surface of the suction poppet 3 that is in sliding contact with an outer circumferential surface of the guide plug 7, and $D_1$ is the outer diameter of the first seating portion 3a that is seated onto the first seat portion 1a.

The larger the difference between the pressure $P_L$ in the low-pressure passage 4L and the pressure $P_H$ in the high-pressure passage 4H is, the larger the force Fs acting on the suction poppet 3 becomes, and the greater the amount of opening of the suction poppet 3 becomes. The greater the amount of opening of the suction poppet 3 is, the higher the suction capacity becomes.

Here, when the first seating portion 3a of the suction poppet 3 is separated from the first seat portion 1a and when the working oil start flow from the low-pressure passage 4L to the high-pressure passage 4H, the pressure becomes high in a region A1 close to the low-pressure passage 4L in the high-pressure passage 4H relative to the pressure in a region A2 distant from the low-pressure passage 4L. Therefore, if the tip-end-side opening portion 61a is located in the region A1 in the high-pressure passage 4H that is close to the low-pressure passage 4L, the difference between the pressure acting on the outer side of the suction poppet 3 and the pressure acting on the inner side of the suction poppet 3 is reduced, and the opening degree of the suction poppet 3 does not become sufficiently large, and thereby, there is a risk in that it may become impossible to ensure a sufficient suction capacity.

In contrast, in this embodiment, the tip-end-side opening portion 61a is located in the region A2 distant from the low-pressure passage 4L in the high-pressure passage 4H. It is confirmed based on experiments, etc. that the sufficient suction capacity can be achieved, if a length L from the first seating portion 3a to the tip-end-side opening portion 61a is equal to or longer than the outer diameter $D_0$ of a part of the projecting portion 53a that slides in the sliding hole 50a when the suction poppet 3 is in the valve-closed state. Therefore, when the suction poppet 3 is in the valve-closed state, the length L from the first seating portion 3a to the tip-end-side opening portion 61a is set so as to be equal to or longer than the outer diameter $D_0$ of the projecting portion 53a.

As described above, in this embodiment, by increasing the pressure difference acting between the outer side and the inner side of the suction poppet 3 by locating the tip-end-side opening portion 61a in the region A2 distant from the low-pressure passage 4L in the high-pressure passage 4H, it is possible to improve the suction capacity of the relief valve 100.

According to the above-described embodiment, following operational advantages are afforded.

The length L from the first seating portion 3a to the tip-end-side opening portion 61a is set so as to be equal to or longer than the outer diameter $D_0$ of the projecting portion 53a. With such a configuration, because the pressure in the back-pressure chamber 8 is equalized to the pressure in the region A2 distant from the low-pressure passage 4L in the high-pressure passage 4H, the difference between the pressure acting on the outer side of the suction poppet 3 and the pressure acting on the inner side of the suction poppet 3 is increased. With such a configuration, the amount of opening of the suction poppet 3 during the suction operation is increase, and thereby, it is possible to improve the suction capacity of the relief valve 100.

Following modifications are also within the scope of the present invention, and it is also possible to combine the configurations shown in the modification with the configurations described in the above-described embodiment, and to combine the configurations described in the following different modifications.

<First Modification>

In the above-mentioned embodiment, although a description has been given of an example in which the tip-end-side opening portion 61a is formed in the tip end surface of the projecting portion 53a, the present invention is not limited to this configuration. The tip-end-side opening portion 61a may be formed in the outer circumferential surface of the projecting portion 53a. In this case, the shortest distance from the tip-end-side opening portion 61a to the first seating portion 3a in the axial direction is set so as to be equal to or longer than the outer diameter $D_0$ of the projecting portion 53a.

<Second Modification>

In the above-mentioned embodiment, although a description has been given of an example in which the main poppet 5 is configured with the main body portion 50 and the pilot piston 51, the present invention is not limited to this configuration. The main poppet 5 may be formed as, for example, a valve body in which the main body portion 50 and the pilot piston 51 described in above-mentioned embodiment are formed integrally. In this case, a part corresponding to the pilot piston 51 does not move relative to the main body portion 50. Also in such a case, by setting the length from the tip-end-side opening portion formed in the projecting portion projecting out from the main poppet to the first seating portion so as to be equal to or longer than the outer diameter of the projecting portion, it is possible to improve the suction capacity of the relief valve.

<Third Modification>

In the above-mentioned embodiment, although a description has been given of an example in which the second restricting hole 65 comes to communicate with the communicating passage 67 when the pressure in the high-pressure passage 4H is equal to or higher than the predetermined pressure PI, the present invention is not limited to this configuration. Instead of forming the second restricting hole 65, it may be possible to provide, between the outer circumferential surface of the shaft portion 53 and the inner circumferential surface of the sliding hole 50a, an annular gap serving as a restrictor that imparts resistance to the working oil passing therethrough. In this case, when the pressure in the high-pressure passage 4H becomes equal to or higher than the predetermined pressure PI, the above-described annular gap comes to communicate with the communicating passage 67. In other words, the working oil in the high-pressure passage 4H is guided to the back-pressure chamber 8 through the tip-end-side passage 61 → the through hole 63 → the communicating passage 67 → the space between the flat surface portion 53b and the inner circumferential surface of the sliding hole 50a → the above-described annular gap between the outer circumferential surface of the shaft portion 53 and the inner circumferential surface of the sliding hole 50a. In the above, the resistance imparted to the flow of the working oil flowing therethrough may be adjusted by providing both of the second restricting hole 65 and the above-described annular gap in the pilot piston 51.

The configurations, operations, and effects of the embodiment of the present invention configured as described above will be collectively described.

The relief valve 100 includes the valve case 2, the suction poppet 3, the main poppet 5, the guide plug 7, the pilot passage 60, the pilot poppet 9, the pilot piston passage 60, and the pilot poppet 9. The valve case 2 is attached to the apparatus main body 1, and the apparatus main body 1 is provided with the high-pressure passage 4H and the low-pressure passage 4L. The suction poppet 3 is provided in the valve case 2, and the suction poppet 3 is configured to allow the working fluid of from the low-pressure passage 4L to the high-pressure passage 4H in the valve-opened state in which the suction poppet 3 is separated from the first seat portion 1a provided in the apparatus main body 1, the suction poppet 3 being configured to shut off the communication between the high-pressure passage 4H and the low-pressure passage 4L in the valve-closed state in which the suction poppet 3 is seated onto the first seat portion 1a. The main poppet 5 is provided in the suction poppet 3, and the main poppet 5 is configured to allow the flow of the working fluid from the high-pressure passage 4H to the low-pressure passage 4L in the valve-opened state in which the main poppet 5 is separated from the second seat portion 3b provided in the suction poppet 3, and the main poppet 5 is configured to shut off the communication between the high-pressure passage 4H and the low-pressure passage 4L in the valve-closed state in which the main poppet 5 is seated onto the second seat portion 3b. The guide plug 7 is configured to define, together with the main poppet 5, the back-pressure chamber 8 in the suction poppet 3. The pilot passage 60 is provided in the main poppet 5, and the pilot passage 60 is configured such that the high-pressure passage 4H and the back-pressure chamber 8 are communicated through the pilot passage 60. The pilot poppet 9 is configured to open/close the passage 21 through which the back-pressure chamber 8 and the drain chamber 12 provided in the guide plug 7 are communicated. When the pressure in the high-pressure passage 4H reaches the set pressure, the main poppet 5 is opened as the pilot poppet 9 is opened, and thereby, the working fluid is guided from the high-pressure passage 4H to the low-pressure passage 4L. When the pressure in the high-pressure passage 4H becomes lower than the pressure in the low-pressure passage 4L, the suction poppet 3 is opened and the working fluid is guided from the low-pressure passage 4L to the high-pressure passage 4H. The suction poppet 3 has the first seating portion 3a configured to be seated onto the first seat portion 1a. The main poppet 5 has the second seating portion 5b seated onto the second seat portion 3b and the projecting portion 53a projecting out from the second seating portion 5b towards the high-pressure passage 4H. The projecting portion 53a is provided with the tip-end-side opening portion 61a of the pilot passage 60, and the tip-end-side opening portion 61a is facing the high-pressure passage 4H. And the length L from the first seating portion 3a to the tip-end-side opening portion 61a is set so as to be equal to or longer than the outer diameter $D_0$ of the projecting portion 53a.

With such a configuration, the length L from the first seating portion 3a to the tip-end-side opening portion 61a is set so as to be equal to or longer than the outer diameter $D_0$ of the projecting portion 53a, and therefore, the difference between the pressure acting on the outer side of the suction poppet 3 and the pressure acting on the inner side of the suction poppet 3 is increased. As a result, it is possible to improve the suction capacity of the relief valve 100.

In the relief valve 100, the main poppet 5 has the main body portion 50 having the second seating portion 5b and the pilot piston 51 provided in the sliding hole 50a so as to be slidable, and the sliding hole 50a is provided in the main body portion 50. In the relief valve 100 the pilot passage 60 has the variable restrictor 66, and the variable restrictor 66 is configured such that the opening area of the variable restrictor 66 is changed as the pilot piston 51 slide with respect to the main body portion 50. In the relief valve 100 the projecting portion 53a is the tip end portion of the pilot piston 51, and the pilot piston 51 projects from the tip end surface of the main body portion 50 facing the high-pressure passage 4H. And in the relief valve 100 the length L from the first seating portion 3a to the tip-end-side opening portion 61a is set so as to be equal to or longer than the outer diameter $D_0$ of the part, and the part is configured to slide in the sliding hole 50a in the pilot piston 51.

With such a configuration, because the pilot passage 60 has the variable restrictor 66 the opening area of which is changed as the pilot piston 51 slides with respect to the main body portion 50, it is possible to adjust the valve-opening property of the relief valve 100.

The relief valve 100 comprise the pilot passage 60, the tip-end-side passage 61, the base-end-side passage 62, and the communicating passage 67. The pilot passage 60 has the tip-end-side passage 61 provided in the pilot piston 51. The tip-end-side passage 61 having the tip-end-side opening portion 61a facing the high-pressure passage 4H. The base-end-side passage 62 provided in the pilot piston 51, the base-end-side passage 62 having the base-end-side opening portion 62a facing the back-pressure chamber 8. The communicating passage 67 provided between the outer circumferential surface of the pilot piston 51 and the inner circumferential surface of the sliding hole 50a of the main body portion 50, and the communicating passage 67 is configured such that the tip-end-side passage 61 and the base-end-side passage 62 are communicated through the communicating passage 67. In the relief valve 100, the variable restrictor 66 has the first restricting hole 64 and the second restricting hole 65 provided between the base-end-side passage 62 and the communicating passage 67, which the first restricting hole 64 and the second restricting hole 65 are configured to impart resistance to the flow of the working fluid passing through the first restricting hole 64 and the second restricting hole 65. The first restricting hole 64 is communicated with the communicating passage 67 when the pressure in the high-pressure passage 4H is lower than the predetermined pressure PI, and the communication between the first restricting hole 64 and the communicating passage 67 is shut off when the pressure in the high-pressure passage 4H is equal to or higher than the predetermined pressure P1. And the second restricting hole 65 has a smaller opening area than the first restricting hole 64, and the second restricting hole 65 is communicated with the communicating passage 67 when the pressure in the high-pressure passage 4H is equal to or higher than the predetermined pressure P1.

With such a configuration, when the pressure in the high-pressure passage 4H is lower than the predetermined pressure PI, the pressure in the high-pressure passage 4H is guided to the back-pressure chamber 8 through the first restricting hole 64, and when the pressure in the high-pressure passage 4H is equal to or higher than the predetermined pressure PI, the pressure in the high-pressure passage 4H is guided to the back-pressure chamber 8 through the second restricting hole 65 having a smaller opening area than the first restricting hole 64. With such a configuration, it is possible to suppress the start-to-leak of the working fluid from the relief valve 100 and to improve the override property of the relief valve 100.

Embodiments of this invention were described above, but the above embodiments are merely examples of applications of this invention, and the technical scope of this invention is not limited to the specific constitutions of the above embodiments.

This application claims priority based on Japanese Patent Application No.2018-049249 filed with the Japan Patent Office on March 16, 2018, the entire contents of which are incorporated into this specification.

**Claims**

1. A relief valve comprising:

   a valve case attached to an apparatus main body, the apparatus main body being provided with a high-pressure passage and a low-pressure passage;
   a suction poppet provided in the valve case, the suction poppet being configured to allow flow of working fluid from the low-pressure passage to the high-pressure passage in a valve-opened state in which the suction poppet is separated from a first seat portion provided in the apparatus main body, and the suction poppet being configured to shut off communication between the high-pressure passage and the low-pressure passage in a valve-closed state in which the suction poppet is seated onto the first seat portion;
   a main poppet provided in the suction poppet, the main poppet being configured to allow flow of the working fluid from the high-pressure passage to the low-pressure passage in a valve-opened state in which the main poppet is separated from a second seat portion provided in the suction poppet, and the main poppet being configured to shut off communication between the high-pressure passage and the low-pressure passage in a valve-closed state in which the main poppet is seated onto the second seat portion;
   a guide plug configured to define a back-pressure chamber in the suction poppet between the guide plug and the main poppet;
   a pilot passage provided in the main poppet, the pilot passage being configured such that the high-pressure passage and the back-pressure chamber are communicated through the pilot passage; and
   a pilot poppet configured to open/close a passage through which the back-pressure chamber and a drain chamber provided in the guide plug are communicated, wherein
   when a pressure in the high-pressure passage reaches a set pressure, the main poppet is opened as the pilot poppet is opened, and thereby, the working fluid is guided from the high-pressure passage to the low-pressure passage;
   when the pressure in the high-pressure passage becomes lower than a pressure in the low-pressure passage, the suction poppet is opened and the working fluid is guided from the low-pressure passage to the high-pressure passage;
   the suction poppet has a first seating portion configured to be seated onto the first seat portion;
   the main poppet has a second seating portion and a projecting portion, the second seating portion being seated onto the second seat portion, and the projecting portion projecting out from the second seating portion towards the high-pressure passage;
   the projecting portion is provided with a tip-end-side opening portion of the pilot passage, the tip-end-side opening portion facing the high-pressure passage; and
   a length from the first seating portion to the tip-end-side opening portion is set so as to be equal to or longer than an outer diameter of the projecting portion.

**2.** The relief valve according to claim 1, wherein:

the main poppet has
a main body portion having the second seating portion, and
a pilot piston provided in a sliding hole so as to be slidable, the sliding hole being provided in the main body portion;
the pilot passage has a variable restrictor, the variable restrictor being configured such that an opening area of the variable restrictor is changed as the pilot piston slides with respect to the main body portion;
the projecting portion is a tip end portion of the pilot piston, the pilot piston projecting from a tip end surface of the main body portion facing the high-pressure passage; and
the length from the first seating portion to the tip-end-side opening portion is set so as to be equal to or longer than an outer diameter of a part, the part being configured to slide in the sliding hole in the pilot piston.

**3.** The relief valve according to claim 2, wherein:

the pilot passage has
a tip-end-side passage provided in the pilot piston, the tip-end-side passage having the tip-end-side opening portion facing the high-pressure passage,
a base-end-side passage provided in the pilot piston, the base-end-side passage having a base-end-side opening portion facing the back-pressure chamber, and
a communicating passage provided between an outer circumferential surface of the pilot piston and an inner circumferential surface of the sliding hole of the main body portion, the communicating passage being configured such that the tip-end-side passage and the base-end-side passage are communicated through the communicating passage;
the variable restrictor has a first restricting hole and a second restricting hole provided between the base-end-side passage and the communicating passage, the first restricting hole and the second restricting hole being configured to impart resistance to flow of the working fluid passing through the first restricting hole and the second restricting hole;
the first restricting hole is communicated with the communicating passage when the pressure in the high-pressure passage is lower than a predetermined pressure, and the communication between the first restricting hole and the communicating passage is shut off when the pressure in the high-pressure passage is equal to or higher than the predetermined pressure; and
the second restricting hole has a smaller opening area than the first restricting hole, the second restricting hole being communicated with the communicating passage when the pressure in the high-pressure passage is equal to or higher than the predetermined pressure.

FIG.1

# FIG.2A

# FIG.2B

FIG.3A

FIG.3B

## INTERNATIONAL SEARCH REPORT

| International application No. |
| --- |
| PCT/JP2019/010884 |

### A. CLASSIFICATION OF SUBJECT MATTER
Int.Cl. F16K17/10(2006.01)i

According to International Patent Classification (IPC) or to both national classification and IPC

### B. FIELDS SEARCHED

Minimum documentation searched (classification system followed by classification symbols)
Int.Cl. F16K17/00-17/34

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | JP 1-13886 Y2 (KAYABA INDUSTRY CO., LTD.) 24 April 1989, column 2, lines 2-21, column 3, line 7 to column 4, line 18, column 5, lines 7-24; fig. 2 (Family: none) | 1-2<br>3 |
| A | JP 2000-227102 A (TOSHIBA MACHINE CO., LTD.) 15 August 2000, paragraphs [0026], [0045]; fig. 1, 3, 7, 9 (Family: none) | 3 |

☒ Further documents are listed in the continuation of Box C.　　☐ See patent family annex.

| | |
| --- | --- |
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
| --- | --- |
| 21 May 2019 (21.05.2019) | 04 June 2019 (04.06.2019) |

| Name and mailing address of the ISA/<br>　Japan Patent Office<br>　3-4-3, Kasumigaseki, Chiyoda-ku,<br>　Tokyo 100-8915, Japan | Authorized officer<br><br>Telephone No. |
| --- | --- |

Form PCT/ISA/210 (second sheet) (January 2015)

**INTERNATIONAL SEARCH REPORT**

| | International application No. |
|---|---|
| | PCT/JP2019/010884 |

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 161915/1975 (Laid-open No. 72927/1977) (TOYOOKI KOGYO CO., LTD.) 31 May 1977, fig. 1-5 (Family: none) | 3 |
| A | Microfilm of the specification and drawings annexed to the request of Japanese Utility Model Application No. 64385/1990 (Laid-open No. 23883/1992) (TOSHIBA MACHINE CO., LTD.) 26 February 1992, specification, page 11, line 2 to page 13, line 7; fig. 1 (Family: none) | 1-3 |

Form PCT/ISA/210 (continuation of second sheet) (January 2015)

**EP 3 693 640 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001343082 A
- JP 2018049249 A